# EUROPEAN PATENT APPLICATION

(11) **EP 4 718 939 A1**
(43) Date of publication of application: **01.04.2026**
(21) Application number: 24847552.7
(22) Date of filing: 28.02.2024
(51) Int. Cl.: H04W 76/27

(54) **PAGING MESSAGE PROCESSING METHOD AND APPARATUS**

(30) Priority: 31.07.2023 CN 202310960368
(71) Applicant: Honor Device Co., Ltd., Shenzhen, Guangdong 518040 (CN)
(72) Inventor: LI, Haibo, Shenzhen, Guangdong 518040 (CN)
(74) Representative: Isarpatent
(86) International application number: PCT/CN2024/078887
(87) International publication number: WO 2025/025585

(57) **Abstract**

This application provides a paging message processing method and an apparatus. The method includes: A terminal in a radio resource control RRC idle state establishes a first RRC connection with a network; the terminal enters an RRC connected state after establishing the first RRC connection with the network; and the terminal in the RRC Connected state performs a call through the first RRC connection. During the call, the terminal receives a first paging Paging message sent by the network, where the first Paging message includes a paging record list pagingRecordList field, the pagingRecordList field carries a first temporary identifier of the terminal, and the first Paging message pages the terminal through the first temporary identifier of the terminal. The terminal does not respond to the first Paging message, and continues to perform the call through the first RRC connection. Therefore, after receiving the first Paging message used for paging the terminal, the terminal that is in the RRC Connected state and is performing the call may continue the current call, to avoid dropping of the current call due to responding to the first Paging message, thereby improving a call success rate and user experience.

## Description

This application claims priority to Chinese Patent Application No. 2023109603681, filed with the China National Intellectual Property Administration on July 31, 2023 and entitled "PAGING MESSAGE PROCESSING METHOD AND APPARATUS", which is incorporated herein by reference in its entirety.

### TECHNICAL FIELD

This application relates to the field of communication technologies, and in particular, to a paging message processing method and an apparatus.

### BACKGROUND

In a process in which a user makes a call through a terminal, if the terminal receives a paging message, the user will find that the current call is automatically hung up. This reduces a call success rate, and affects user experience.

### SUMMARY

This application provides a paging message processing method and an apparatus, to improve a call success rate and user experience. Some embodiments of this application provide the following technical solutions.

According to a first aspect, an embodiment of this application provides a paging message processing method, and the method includes: A terminal in a radio resource control RRC idle Idle state establishes a first RRC connection with a network side device; the terminal enters an RRC connected Connected state after establishing the first RRC connection with the network side device; the terminal in the RRC Connected state performs a call through the first RRC connection; the terminal receives, in the process of the call, a first paging Paging message sent by the network side device, where the first Paging message includes a paging record list pagingRecordList field, the pagingRecordList field carries a first temporary identifier of the terminal, and the first Paging message pages the terminal through the first temporary identifier of the terminal; and the terminal does not respond to the first Paging message, and continues the call through the first RRC connection. Therefore, after receiving the first Paging message used for paging the terminal, the terminal that is in the RRC Connected state and is performing the call may continue the current call, to avoid dropping of the current call due to responding to the first Paging message, thereby improving a call success rate and user experience. After receiving the first Paging message used for paging the terminal that is in the RRC connected state and that is performing a call, the terminal may continue the current call. Therefore, "ongoing call" may be displayed in an interface (for example, a call interface) of the terminal, and a user may continue to perform the call through the terminal, thereby improving user experience.

In a possible implementation, the method further includes: The terminal in the RRC Idle state receives, before the terminal establishes the first RRC connection with the network side device, a second paging Paging message sent by the network side device, where the second Paging message includes a paging record list pagingRecordList field, the pagingRecordList field carries a second temporary identifier of the terminal, and the second Paging message pages the terminal through the second temporary identifier of the terminal; and the terminal responds to the second Paging message. The second temporary identifier may be the same as or different from the first temporary identifier. After receiving the second Paging message used for paging the terminal, the terminal in the RRC Idle state may respond to the second Paging message, to establish the first RRC connection with the network side device. After completing the first RRC connection, the terminal switches from the RRC Idle state to the RRC Connected state, and the terminal may perform a call through the first RRC connection.

In a possible implementation, that the terminal responds to the second Paging message includes: The terminal sends an RRC connection request to the network side device to establish the first RRC connection.

In a possible implementation, the method further includes: The terminal receives, in the process of the call, a third paging Paging message sent by the network side device, where the third Paging message includes at least one of a system information modification systemInfoModification field, an earthquake and tsunami warning system notification indication etws-indication field, and a commercial mobile alert system notification indication cmas-Indication field, the systemInfoModification field carries modified system information, the etws-indication field carries an earthquake and tsunami warning system etws notification, the cmas-Indication field carries a commercial mobile alert system cmas notification, and the third Paging message is used to notify the terminal of at least one of the system information being modified, receiving the etws notification, or receiving the cmas notification; and the terminal responds to the third Paging message. Therefore, when the terminal that is in the RRC Connected state and that performs the call receives the third Paging message carrying the notification, for example, at least one of a system information modification notification, an etws notification, and a cmas notification, the terminal responds to the third Paging message, and processes, in time, the notification carried in the third Paging message. In a possible case, the terminal responding to the third Paging message may affect the call performed through the first RRC connection. For example, the ongoing call may be interrupted or automatically hung up, or short-time silence may occur.

In an implementation, after the terminal that is in the RRC Connected state and that performs the call receives the third Paging message carrying the notification, the current call may be automatically hung up after the terminal responds to the third Paging message. In this case, ending of the call is displayed in the interface of the terminal, and the user senses that the call is dropped.

In a possible implementation, that the terminal does not respond to the first Paging message includes: The terminal does not release an RRC resource corresponding to the first RRC connection, switch from the RRC Connected state to the RRC Idle state, send, to the network side device, a request for triggering re-establishment of an RRC connection, and send the RRC connection request to the network side device.

In this embodiment, the terminal that is in the RRC Connected state and that performs the call may perform at least one of the following operations in a process of responding to the Paging message after receiving the Paging message used for paging the terminal: releasing the RRC resource corresponding to the RRC connection used in the call, switching from the RRC Connected state to the RRC Idle state, sending the request for triggering re-establishment of an RRC connection to the network side device, or sending the RRC connection request to the network side device. These operations may cause the call performed by the terminal to be automatically hung up. However, before the first Paging message used for paging the terminal is received, an uplink call and a downlink call of the terminal that is in the RRC Connected state and that performs the call are both normal. The terminal in the RRC Connected state does not need to perform these operations, that is, does not need to release a radio control resource (that is, local release) and perform a procedure of re-establishing an RRC connection to perform state synchronization with the network side device. After the terminal performs local release, the terminal switches from the RRC Connected state to the RRC Idle state, and the procedure of re-establishing an RRC connection includes sending, to the network side device, the request for triggering re-establishing an RRC connection, and sending the RRC connection request to the network side device. Therefore, after receiving the first Paging message used for paging the terminal, the terminal that is in the RRC Connected state and performs the call may reduce (or even no longer) performing operations such as local release and the procedure of re-establishing an RRC connection, thereby reducing call drops caused by these operations, to improve a call success rate and user experience.

In a possible implementation, that the terminal responds to the third Paging message includes at least one of the following: The terminal releases an RRC resource corresponding to the first RRC connection, the terminal switches from the RRC Connected state to the RRC Idle state, the terminal sends, to the network side device, a request for triggering re-establishment of an RRC connection, or the terminal sends the RRC connection request to the network side device.

In a possible implementation, that the terminal does not respond to the first Paging message includes: The terminal does not respond to the first Paging message in a case in which a value of a call success rate of the terminal is greater than a threshold, and/or a receiving/transmitting status of voice data on an Internet Protocol Multimedia Subsystem-dedicated bearer is normal within a first preset time period before the first Paging message is received, where the call success rate of the terminal indicates a probability that a call of the terminal is not automatically hung up in a historical time period in a case in which the terminal does not respond to the first Paging message after the terminal receives, in a first scenario, the first Paging message sent by the network side device, and the first scenario is a process in which the terminal is in the RRC Connected state and performs the call through the network side device.

The Internet Protocol Multimedia Subsystem-dedicated bearer is an IMS dedicated bearer that is allocated by the network side device to the terminal and that is used to carry a voice service. Voice data is received and transmitted through the IMS dedicated bearer, for example, the following DRB #3 allocated by the LTE base station to the terminal, and the following DRB #2 allocated by the NR base station to the terminal. The first preset time period may be the following X seconds, where X is greater than or equal to 1. In this embodiment, the terminal may preset a preset condition for not responding to the first Paging message. The preset condition may be that a value of the call success rate of the terminal is greater than a threshold, or a receiving/transmitting status of voice data on an Internet Protocol Multimedia Subsystem-dedicated bearer within the first preset time period before the first Paging message is received is normal, or a value of the call success rate of the terminal is greater than a threshold and a receiving/transmitting status of voice data on an Internet Protocol Multimedia Subsystem-dedicated bearer within the first preset time period before the first Paging message is received is normal. In this way, when the terminal that is in the RRC Connected state and that performs the call receives the first Paging message used for paging the terminal and the preset condition is met, the terminal does not respond to the first Paging message. Because the call success rate of the terminal is greater than the threshold, and/or the receiving/transmitting status of voice data on the Internet Protocol Multimedia Subsystem-dedicated bearer within the first preset time period before the first Paging message is received is normal, the terminal can make a call as normally as possible. Therefore, not responding to the first Paging message when the terminal meets these conditions can ensure that the call is normally performed, thereby improving the call success rate and user experience.

In some examples, the receiving/transmitting status of the voice data on the Internet Protocol Multimedia Subsystem-dedicated bearer being normal may mean that the terminal in the RRC Connected state may send voice data to a peer end of a call through the network side device, and the terminal in the RRC Connected state may receive the voice data of the peer end of the call that is sent by the network side device.

In some examples, the terminal may preset an initial value for the call success rate. The terminal in the RRC Connected state receives the first Paging message used for paging the terminal for the first time, determines, based on the initial value of the call success rate, whether to not respond to the first Paging message, and monitors whether the call is hung up due to a network exception in a case of not responding to the first Paging message, to update the call success rate based on whether the call is hung up due to the network exception.

In some examples, after receiving the first Paging message used for paging the terminal, the terminal in the RRC Connected state may directly not respond to the first Paging message. After obtaining the call success rate by collecting statistics, if the terminal receives the first Paging message that is sent by the network side device and that is used for paging the terminal, the terminal determines, based on the value of the call success rate, whether to respond to the first Paging message. That is, the call success rate of the terminal is calculated based on a call status in a historical time period after the terminal does not respond to the first Paging message in the first scenario. The call success rate of the terminal is used to represent a probability that the call of the terminal is not automatically hung up when the terminal does not respond to the first Paging message in the historical time period after the terminal receives, in the first scenario, the first Paging message sent by the network side device. The first scenario is a process in which the terminal is in the RRC Connected state and performs the call through the network side device.

In a possible implementation, after the terminal does not respond to the first Paging message, the method further includes: detecting whether the receiving/transmitting status of the voice data on the Internet Protocol Multimedia Subsystem-dedicated bearer is normal after not responding to the first Paging message, and/or whether the call continued through the network side device is automatically hung up due to a network exception after not responding to the first Paging message; and if the receiving/transmitting status of the voice data is normal, and/or the call is not automatically hung up due to the network exception, after the terminal receives the first Paging message sent by the network side device, the terminal does not respond to the first Paging message received again; or if the receiving/transmitting status of the voice data is abnormal, and/or the call is automatically hung up due to the network exception, after the terminal receives the first Paging message sent by the network side device, the terminal responds to the first Paging message received again, where the received first Paging message is a first Paging message sent again by the network side device in a process in which the terminal is in the RRC Connected state and continues to perform the call through the network side device, or a first Paging message sent by the network side device in a process in which the terminal is in the RRC Connected state and performs a next call through the network side device.

The receiving/transmitting status of the voice data being abnormal may mean that the terminal in the RRC Connected state cannot send voice data to the peer end of the call through the network side device, and the terminal in the RRC Connected state does not receive the voice data of the peer end of the call that is sent by the network side device. After the terminal does not respond to the first Paging message, the terminal may monitor the receiving/transmitting status of the voice data on the Internet Protocol Multimedia Subsystem-dedicated bearer, and/or the call that continues to be performed through the network side device, to determine, based on a monitoring result, whether to respond to the first Paging message after receiving the first Paging message. For example, after the terminal does not respond to the first Paging message, if the receiving/transmitting status of the voice data is normal, and/or the call is not automatically hung up due to the network exception, after the terminal receives the first Paging message sent by the network side device, the terminal does not respond to the received first Paging message. However, if the receiving/transmitting status of the voice data is abnormal, and/or the call is automatically hung up due to the network exception, after the terminal receives the first Paging message sent by the network side device again, the terminal responds to the received first Paging message, to ensure that the call is normally performed as much as possible when the terminal does not need to respond to the first Paging message, and may respond in time when the terminal needs to respond to the first Paging message.

In a possible implementation, the detecting whether the receiving/transmitting status of the voice data on the Internet Protocol Multimedia Subsystem-dedicated bearer is normal after not responding to the first Paging message, and/or whether the call continued through the network side device is automatically hung up due to a network exception after not responding to the first Paging message includes: detecting whether a receiving/transmitting status of the voice data on the Internet Protocol Multimedia Subsystem-dedicated bearer within a second preset time period after not responding to the first Paging message is normal, and/or whether the call continued through the network side device is automatically hung up due to a network exception within a third preset time period after not responding to the first Paging message.

In some examples, the second preset time period may be the following t1 seconds, where t1 may be greater than or equal to 1, and the third preset time period may be the following t seconds, where t may be greater than or equal to 1. If receiving/transmitting of the voice data within the second preset time period is normal, and/or the call is not automatically hung up due to the network exception in the third time period, it indicates that the terminal can keep the call normal when the terminal does not respond to the first Paging message, and not responding to the first Paging message by the terminal is effective (which may be understood as bringing benefits to the current call). If receiving/transmitting of the voice data within the second preset time period is abnormal, and/or the call is automatically hung up due to the network exception in the third time period, it is considered that not responding to the first Paging message is effective (which may be understood as bringing no benefit to the current call). Therefore, the terminal may determine, based on whether not responding to the first Paging message brings benefits to the current call, whether to respond to the first Paging message when receiving again the first Paging message that is sent by the network side device and that is used for paging the terminal. Optionally, the terminal may determine, based on a time interval at which the first Paging message is received again, whether to not respond to the first Paging message. If the time interval between not responding to the first Paging message and receiving the first Paging message again is short, there is a low possibility that a capability of the network side device changes within a short time. It is determined, based on the capability of the network side device within a short time, whether to respond to the first Paging message, to improve accuracy.

In a possible implementation, a start point of either of the second preset time period and the third preset time period is any one of the following: a time point when the terminal receives the first Paging message, a time point when the terminal determines that the first temporary identifier carried in the first Paging message matches a pre-allocated first temporary identifier of the terminal, and a time point when the terminal does not respond to the first Paging message, and an end point of either of the second preset time period and the third preset time period is a time point after the terminal does not respond to the first Paging message.

In a possible implementation, after the terminal does not respond to the first Paging message, the method further includes: The terminal increases a value of the call success rate if the receiving/transmitting status of the voice data on the Internet Protocol Multimedia Subsystem-dedicated bearer is normal after the terminal does not respond to the first Paging message, and/or the call continued through the network side device is not automatically hung up due to the network exception after the terminal does not respond to the first Paging message; or the terminal decreases the value of the call success rate if the receiving/transmitting status of the voice data on the Internet Protocol Multimedia Subsystem-dedicated bearer is abnormal after the terminal does not respond to the first Paging message, and/or the call continued through the network side device is automatically hung up due to the network exception after the terminal does not respond to the first Paging message.

In some examples, the terminal may start a timer when the terminal does not respond to the first Paging message. For example, the timer is started after the first Paging message is not responded to. In addition, the terminal may set preset duration corresponding to the timer, and in a process of determining whether the receiving/transmitting status of the voice data is normal and/or whether the call is automatically hung up due to the network exception, processing on the value of the call success rate is determined with reference to whether timing of the timer is greater than the preset duration. For example, in a manner, when it is determined that the receiving/transmitting status of the voice data is normal and/or the call is not automatically hung up due to a network exception within a unit time (for example, one second), whether timing of the timer is greater than the preset duration is further determined, and if the timing of the timer is greater than the preset duration, it is determined that the timing of the timer expires, and the value of the call success rate is determined and increased with reference to this. If timing of the timer is less than the preset duration, whether the receiving/transmitting status of the voice data is normal and/or whether the call is automatically hung up due to a network exception within a unit time (for example, one second), and the timer continues to time. If it is determined that the receiving/transmitting status of the voice data is abnormal and/or the call is automatically hung up due to a network exception within a unit time (for example, one second), the value of the call success rate is decreased, to improve accuracy of the call success rate.

In a possible implementation, the method further includes at least one of the following: the first temporary identifier and/or the second temporary identifier is a temporary mobile subscriber identifier of system architecture evolution; or the network side device is a long term evolution base station, and the request for triggering re-establishment of an RRC connection is a tracking area update request message; or the network side device is a new radio base station, and the request for triggering re-establishment of an RRC connection is a registration request.

According to a second aspect, this application provides a terminal, where the terminal includes one or more processors and a memory, where the memory is configured to store computer program code, the computer program code includes computer instructions, and when the one or more processors execute the computer instructions, the terminal performs the foregoing paging message processing method.

According to a third aspect, this application provides a chip system, used in a terminal, and the chip system includes at least one processor and an interface, where the interface is configured to receive instructions and transmit the instructions to the at least one processor. The at least one processor runs the instructions, so that the terminal performs the foregoing paging message processing method. The chip system may be a modem processor (Modem) or a system on chip (System on Chip, Soc) including a Modem, and the foregoing paging message processing method may be implemented by the Modem.

### BRIEF DESCRIPTION OF DRAWINGS

FIG. 1 is a schematic signaling diagram of processing a Paging message by a UE according to an embodiment of this application;
FIG. 2 is another schematic signaling diagram of processing a Paging message by a UE according to an embodiment of this application;
FIG. 3 is a schematic signaling diagram of processing a Paging message according to an embodiment of this application;
FIG. 4 is a schematic diagram of a message structure of a Paging message according to an embodiment of this application;
FIG. 5 is a schematic diagram of another message structure of a Paging message according to an embodiment of this application;
FIG. 6 is a schematic signaling diagram of processing a Paging message in an LTE network according to an embodiment of this application;
FIG. 7 is a schematic signaling diagram of processing a Paging message in an NR network according to an embodiment of this application;
FIG. 8 is a schematic code diagram of receiving a Paging message and establishing an RRC connection by UE according to an embodiment of this application;
FIG. 9 is a schematic code diagram of an RRC connection request according to an embodiment of this application;
FIG. 10 is a schematic code diagram of abnormal hanging up of a call according to an embodiment of this application;
FIG. 11 is a schematic signaling diagram of a paging message processing method according to an embodiment of this application;
FIG. 12 is another schematic signaling diagram of a paging message processing method according to an embodiment of this application;
FIG. 13 is still another schematic signaling diagram of a paging message processing method according to an embodiment of this application;
FIG. 14 is yet another schematic signaling diagram of a paging message processing method according to an embodiment of this application;
FIG. 15 is a schematic diagram of a hardware structure of a terminal according to an embodiment of this application; and
FIG. 16 is a diagram of a software architecture of a terminal according to an embodiment of this application.

### DESCRIPTION OF EMBODIMENTS

The following clearly and completely describes technical solutions in embodiments of this application with reference to the accompanying drawings in embodiments of this application. Terms used in the following embodiments are only intended to describe particular embodiments, and are not intended to limit this application. As used in this specification and the claims of this application, singular expression forms such as "one", "a", "the", "foregoing", "this", or "this one" are intended to also include an expression form like "one or more", unless clearly indicated to the contrary in the context. It should be understood that, in embodiments of this application, "one or more" means one, two, or more than two. The term "and/or" describes an association relationship between associated objects and represents that three relationships may exist. For example, A and/or B may represent the following cases: Only A exists, both A and B exist, and only B exists. A and B may be singular or plural. The character "/" generally indicates an "or" relationship between the associated objects.

Reference to "an embodiment" or "some embodiments" described in this specification means that a specific characteristic, structure or feature described in combination with the embodiment is included in one or more embodiments of this application. Therefore, the statements "in one embodiment", "in some embodiments", "in some other embodiments", "in other embodiments", and the like in different places in this specification do not necessarily refer to the same embodiment, but mean "one or more but not all embodiments", unless otherwise specially emphasized in other ways. The terms "include", "comprise", "have", and variants thereof all mean "including but not limited to", unless otherwise specifically emphasized in other ways.

"A plurality of" involved in embodiments of this application refers to two or more. It should be noted that in descriptions of embodiments of this application, terms such as "first" and "second" are merely used for a purpose of distinguishing descriptions and are neither intended to indicate or imply relative importance nor intended to indicate or imply a sequence.

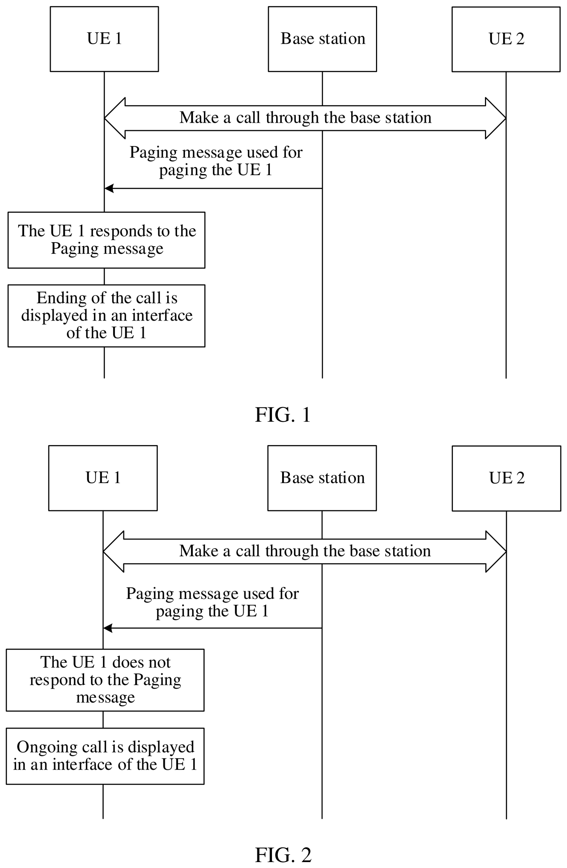

FIG. 1 shows an example after a terminal (namely, a UE) in a radio resource control connected state (RRC Connected state) receives a paging (Paging) message sent by a network side device (for example, a base station) in a call scenario. In FIG. 1, a UE 1 and a UE 2 each are in an RRC Connected state, and the UE 1 and the UE 2 make a call through a base station. In the process of the call, at least one of the UE 1 and the UE 2 may receive a Paging message sent by the base station. For example, in FIG. 1, the UE 1 receives the Paging message sent by the base station. After receiving the Paging message, the UE 1 determines that the Paging message is a message used for paging the UE 1. In this case, the UE 1 responds to the Paging message. Responding to the Paging message includes at least one of the following: releasing an RRC resource, switching from the RRC Connected state to an RRC Idle state, sending a request for triggering re-establishment of an RRC connection to the base station, or sending an RRC connection request to the base station, and displaying ending of the call in an interface of the UE 1. Therefore, the call is automatically hung up after the UE that is in the RRC Connected state and that is in a call process receives the Paging message used for paging the UE, reducing a call success rate, and affecting user experience.

Some embodiments of this application provide a paging message processing method. After receiving a Paging message used for paging a UE, the UE that is in an RRC Connected state and that is in a call process may not respond to the Paging message, to improve a call success rate and user experience. As shown in FIG. 2, a UE 1 and a UE 2 that are in an RRC connected state make a call through a base station. In the call process, the UE 1 receives a Paging message that is used for Paging the UE 1 and that is sent by the base station. The UE 1 does not respond to the Paging message. Responding to the Paging message includes: not releasing an RRC resource, not switching from the RRC Connected state to an RRC Idle state, not sending a request for triggering re-establishment of an RRC connection to the base station, and not sending an RRC connection request to the base station and reducing an ending of the call due to the Paging message in the call displayed in an interface of the UE 1. Therefore, the call success rate and user experience are improved.

For ease of understanding, several terms and related technologies in this application are briefly described below.
1. Radio resource control (radio resource control, RRC) state The RRC state includes: a connected state and an idle state. The connected state (namely, an RRC Connected state, also referred to as an RRC Connected state or a connected state) may refer to that an RRC connection between a terminal (namely, a UE) and an access network device (for example, a base station) is established. When the UE is in the RRC connected state, a connection between the UE and the access network device and a connection between the access network device and a core network device are both established. If data needs to be transmitted, data transmission may be directly completed through the established connections.

The idle state (namely, an RRC Idle state, also referred to as an RRC Idle state or an idle state) may refer to that an RRC connection between the UE and the access network device is not established. When the UE is in the RRC Idle state, if there is data to be transmitted, the RRC connection between the UE and the network device needs to be established before data transmission. A UE in the RRC Idle state has the following features (a long term evolution (Long Term Evolution, LTE) network is used as an example):
(1) The base station (for example, an eNodeB) does not know whether the UE exists;
(2) an RRC connection does not exist between the UE and the eNodeB;
(3) a unique identifier is allocated to the UE in a tracking area (Tracking Area, TA) of the UE;
(4) the UE has registered with a mobility management entity (Mobility Management Entity, MM), and has a context in the MME; and
(5) there is no non-access(Non-access stratum, NAS) stratum signaling connection between the UE and the core network device.

2. Paging (Paging) is a process of searching for a UE that is initiated by a network side. A triggering condition of paging may be that a network side device has signaling or data that needs to be sent to the UE. The network side device includes an access network device and a core network device. When the UE is in an RRC Idle state, the signaling or the data may be sent by the core network device. If the UE is in the RRC Idle state, and no connection is established between the UE and the network side device, the network side device cannot send signaling or data to the UE, and the network side device does not know a location of the UE. Therefore, in a scenario in which the UE is in the RRC Idle state and the network side device (for example, the core network device) sends signaling or data to the UE, the network side device performs paging once through a Paging message, to notify the UE that the signaling or the data needs to be sent to the UE. After receiving the Paging message, the UE actively establishes a connection to the network side device (for example, the access network device), so that the UE enters an RRC Connected state. In this way, data can be received and transmitted between the UE and the network side device.

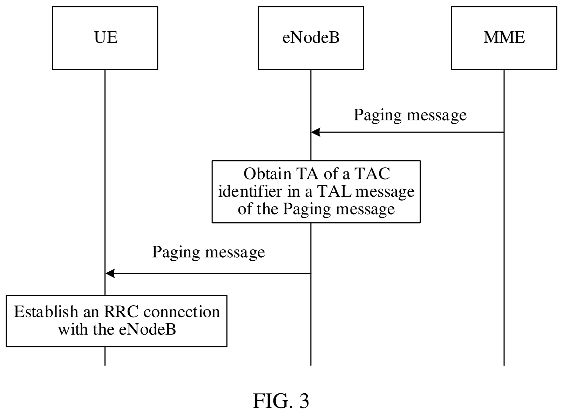

A Paging procedure is shown in FIG. 3. An MME sends a Paging message to a base station (for example, an eNode B). The Paging message carries a tracking area list (Tracking Area List, TAL) message, at least one tracking area code (Tracking Area Code, TAC) is recorded in the TAL, one TAC is used for identifying one tracking area (Tracking Area, TA), one TA includes one or more cells, and a UE may camp under one cell of one TA. Based on the TA identified by the TAC in the TAL message, the eNodeB sends, through a logical channel (for example, a paging control channel (Paging Control Channel, PCCH)), a Paging message to UEs in all cells belonging to the TA, to page the UE. The Paging message includes a field indicating a paging source and a UE identifier. After receiving the Paging message and determining that the UE identifier carried in the Paging message matches an identifier of the UE, the UE responds to the Paging message, and the UE may establish an RRC Connection with the eNodeB, and the UE switches from an RRC Idle state to an RRC Connected state. When the UE is in the RRC Idle state, the UE identifier carried in the Paging message triggering the UE to establish the RRC connection may be encapsulated in a paging record list (pagingRecordList) field. The UE identifier may be a system architecture evolved-temporary mobile subscriber identity (SAE-TMSI, System Architecture Evolved-Temporary Mobile Subscriber Identity, s-TMSI for short), and the s-TMSI may be the foregoing second temporary identifier. For the Paging message sent by the MME to the eNodeB, refer to section 9.1.6 of 36.413. For a processing procedure after the eNodeB receives the Paging message, refer to section 8.5 of 36.413. For the Paging message sent by the eNodeB, refer to section 6.2.2 of 36.331. For a processing procedure after the UE receives the Paging message, refer to section 5.3.2 of 36.331.

A role of the Paging message includes any one of the following: (1) Send a call request to a UE in an RRC Idle state. For a UE in an RRC Connected state, a network side device knows a base station to which the UE accesses. Therefore, if there is an incoming call, the network side device does not need to page through a Paging message, and only needs to directly deliver an invite (invite) message. (2) Notify the UE in the RRC Idle state and the RRC Connected state that system information is modified. (3) Notify the UE to start to receive an earthquake and tsunami warning system (Earthquake and Tsunami Warning System, ETMS) notification, where the ETMS notification includes an ETWS primary (primary) notification and/or an ETWS secondary (secondary) notification. (4) Notify the UE to start to receive a commercial mobile alert system (Commercial Mobile Alert System, CMAS) notification.

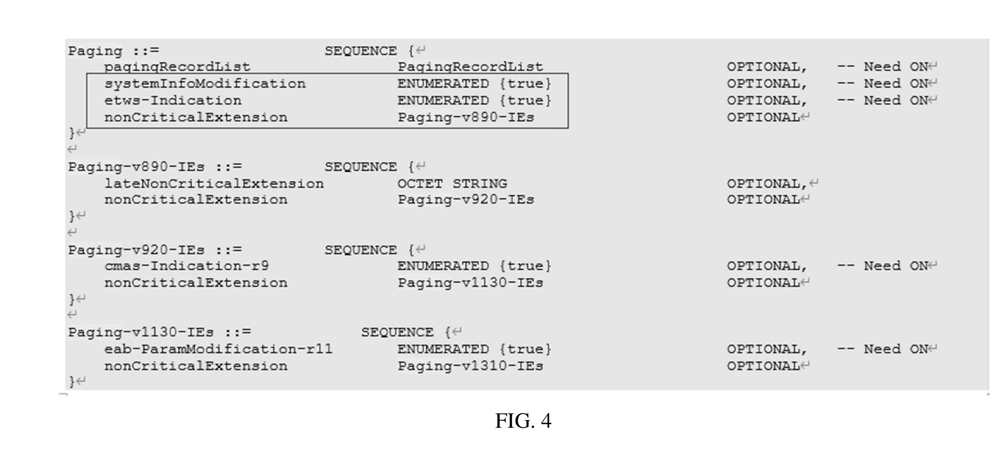

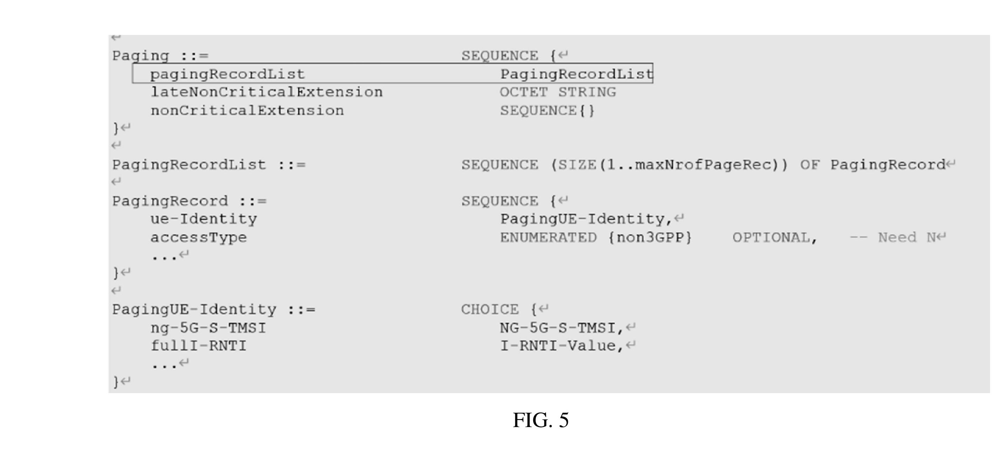

A message structure of a Paging message in an LTE network is shown in FIG. 4. A pagingRecordList field is used for recording a paged UE, a system information modification (systemInfoModification) field indicates system message modification, an earthquake and tsunami system notification indication (etws-Indication) field indicates an ETWS primary notification and/or an ETWS secondary notification, and a commercial mobile alert system notification indication (cmas-Indication) field indicates a CMAS notification. A message structure of a Paging message in a new radio (New Radio, NR) network is shown in FIG. 5. A pagingRecordList field is used for recording a paged UE.

It can be known from the foregoing Paging messages shown in FIG. 4 and FIG. 5 that for a UE in an RRC Connected state in the LTE network, the UE may sense a notification of system message modification by receiving the Paging message. For a UE in an RRC Connected state in the NR network, system message modification is not notified through the Paging message, and is indicated by a short message (a short message indicator is 10 or 11). Therefore, for the UE in the RRC Connected state, theoretically, a network side device does not page the UE by delivering the Paging message. However, during actual application, the network side device pages the UE by delivering the Paging message. When receiving the Paging message, the UE in the RRC Connected state considers that states between the UE and the network side device are out of synchronization. Therefore, after receiving the Paging message, the UE in the RRC Connected state performs local release (releases an RRC connection), and then re-establishes an RRC connection.

In an example, in a call scenario (for example, a caller ringing, a callee ringing, a call being established, or a call being performed), the UE in the RRC Connected state, whether in the NR network or the LTE network, responds to the Paging message to perform local release after receiving the Paging message used for paging the UE, and then re-initiates registration and access to re-establish an RRC connection. However, after research, the applicant finds that during a call of the UE, if the UE re-establishes the RRC connection, the network side device probably does not reconfigure, for the UE, an IP Multimedia Subsystem (IP Multimedia Subsystem, SMS)-dedicated bearer used for carrying a voice service (that is, 5qi=1/QCI=1). Consequently, the call of the UE in the RRC Connected state is BYE/Canceled (ended) by the network side device according to a 503 reason value. As a result, the current call of the UE in the RRC Connected state is automatically hung up (which may be understood as that the current call is dropped), thereby reducing a call success rate and affecting user experience. The call drop may be abnormal termination of a call due to an abnormal reason in a call process.

Actually, before the UE in the RRC connected state receives the Paging message used for paging the UE to trigger the UE to perform local release, both an uplink call and a downlink call are normal, and the UE in the RRC Connected state does not need to perform local release and re-perform an RRC establishment procedure to perform state synchronization with the network side device.

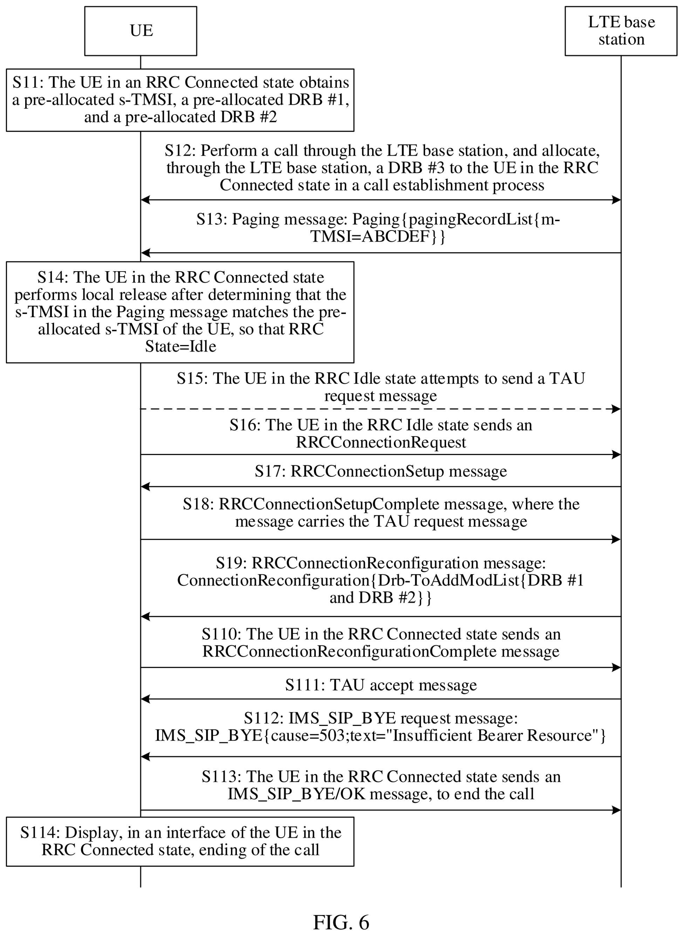

A processing procedure in which a UE in an RRC Connected state receives a Paging message used for paging the UE in a call scenario is described with reference to the accompanying drawings. Refer to FIG. 6. FIG. 6 shows a processing procedure after a UE in an RRC Connected state performs a call through an LTE base station in an LTE network and receives the Paging message during the call. In the procedure, the LTE base stations in different steps may be a same base station, and the following steps may be included.

S11: The UE in the RRC Connected state obtains a pre-allocated s-TMSI and a pre-allocated data radio bearer (Data Radio Bearer, DRB). The s-TMSI is used for distinguishing a UE. After the UE registers with a core network through the LTE base station, the UE establishes an RRC connection with the LTE base station, and enters the RRC Connected state. In the registration process, the s-TMSI is allocated to the UE through the LTE base station, for example, s-TMSI=ABCDEF. In addition, in the registration process, the DRB is allocated to the UE. For example, two DRBs are allocated to the UE, and are separately denoted as a DRB #1 and a DRB #2. The DRB #1 represents a data service bearer, the DRB #2 represents an IMS default bearer, and the IMS default bearer is used to carry an IMS signaling service. After registration is completed, the s-TMSI and/or the DRB allocated to the UE may be modified. After the modification occurs, the LTE base station sends the modified s-TMSI and/or DRB to the UE.

Data or signaling interaction exists between the UE and the core network within preset duration after the UE enters the RRC Connected state, and the LTE base station does not release the RRC connection with the UE, so that the UE is in the RRC Connected state. If there is no data or signaling interaction between the UE and the core network within preset duration after registering with the core network, the LTE base station releases the RRC connection with the UE, so that the UE is in an RRC Idle state. The preset duration may be preset in the LTE base station, and a value of the preset duration is not limited. After the UE is in the RRC Idle state, the network side device may trigger, through a Paging message, the UE to establish an RRC connection. After the RRC connection is established, the UE switches from the RRC Idle state to the RRC Connected state.

S12: The UE in the RRC Connected state performs a call through the LTE base station, and a DRB #3 is allocated, through the LTE base station, to the UE in the RRC Connected state in a call establishment process. In this embodiment, DRB #3 indicates an IMS dedicated bearer, and the IMS dedicated bearer is used to carry a voice service. The three DRBs, namely, the DRB #1, the DRB #2, and the DRB #3, are merely an example. A DRB and a service type carried by each DRB are not limited in this embodiment. The call refers to a voice call. For example, the UE, as a calling party, initiates the call to a called party through a call application. If the UE is used as a called party, the call of a calling party is received through the call application.

The UE in the RRC Connected state may make a call through the RRC connection established between the UE and the LTE base station. The RRC connection may be the foregoing first RRC connection.

S13: The LTE base station sends a Paging message to the UE in the RRC Connected state in the process in which the UE in the RRC Connected state performs the call, where a pagingRecordList field of the Paging message carries a UE identifier. For example, in this embodiment, the pagingRecordList field carries an s-TMSI, and s-TMSI=ABCDEF, to page, through the Paging message, a UE whose s-TMSI is ABCDEF. The s-TMSI carried in the pagingRecordList field may be the foregoing first temporary identifier.

S14: The UE in the RRC Connected state performs local release after determining that the s-TMSI in the Paging message matches the pre-allocated s-TMSI of the UE, so that the UE switches from the RRC Connected state to the RRC Idle state. Because the UE is in the RRC Connected state, when the UE receives the Paging message and determines that the s-TMSI in the Paging message matches the pre-allocated s-TMSI of the UE, the UE may consider that the UE receives the Paging message used for paging the UE because states of the UE and the network side device are not synchronized. Therefore, when the UE receives the Paging message used for paging the UE, the UE may perform local release, so that the UE switches from the RRC Connected state to the RRC Idle state. Then, the UE starts to re-establish an RRC connection, to synchronize the states with the network side device. However, when the UE performs local release, the UE is in the call, and the local release may cause silence of the call. The local release may be to release an RRC resource corresponding to the RRC connection used for the call.

S15: The UE in the RRC Idle state attempts to send a tracking area update (Tracking Area Update, TAU) request (TAU request) message to the LTE base station, to trigger re-establishment of an RRC connection. A modem processor (modem) of the UE in the RRC Idle state generates the TAU request message at a non-access (Non-Access Stratum, NAS) stratum, and the TAU request message is sent from the NAS to an RRC layer of the Modem. After receiving the TAU request message, the RRC layer sends an RRC connection request to the LTE base station, to re-establish an RRC connection.

S16: The UE in the RRC Idle state sends an RRC connection request (RRCConnectionRequest) to the LTE base station.

S17: The LTE base station sends an RRC connection setup (RRCConnectionSetup) message to the UE.

S18: The UE sends an RRC connection setup complete (RRCConnectionSetupComplete) message to the LTE base station, so far as the UE completes RRC re-establishment. When the UE sends the RRCConnectionSetupComplete message to the LTE base station, the RRCConnectionSetupComplete message may carry a TAU request message, to complete sending of the TAU request message. Alternatively, after the UE sends the RRCConnectionSetupComplete message to the LTE base station, the UE sends the TAU request message to the LTE base station. In FIG. 6, the RRCConnectionSetupComplete message may carry the TAU request message.

It should be noted that from the perspective of the LTE base station, when the UE sends the RRC connection request to the LTE base station, the UE enters the RRC Connected state. However, from the perspective of the core network device, when the UE sends the RRC connection request to the LTE base station, the UE is in the RRC Idle state. After the UE sends the RRC connection setup complete message to the LTE base station, from the perspective of the LTE base station and the core network device, the UE enters the RRC Connected state.

S19: The LTE base station sends an RRC connection reconfiguration (RRCConnectionReconfiguration) message to the UE in the RRC Connected state. The message may carry a DRB allocated to the UE. For example, the DRB allocated to the UE is carried in a drb-ToAddModList field of the message. In this embodiment, the drb-ToAddModList field carries the DRB #1 and the DRB #2, that is, two DRBs are allocated to the UE in the RRC Connected state. The DRB #1 indicates a data service bearer, and the DRB #2 indicates an IMS default bearer.

S110: The UE in the RRC Connected state sends an RRC connection reconfiguration complete (RRCConnectionReconfigurationComplete) message to the LTE base station.

S111: The LTE base station sends a tracking area update accept (TAU accept) message to the UE in the RRC Connected state.

S112: The LTE base station sends an IMS_SIP_BYE (SMS_SIP_BYE) request message to the UE in the RRC Connected state, where an SMS_SIP_BYE message carries SMS_SIP_BYE because of a 503 reason value, and a reason for generating the 503 reason value is that a bearer resource is insufficient, and is mainly caused because no IMS dedicated bearer for carrying a voice service is allocated.

S113: The UE in the RRC Connected state sends an IMS_SIP_BYE/OK (SMS_SIP_BYE/OK) message to the LTE base station, to end the call.

S114: Display, in an interface of the UE in the RRC Connected state, ending of the call, and in this case, a user senses that the call is dropped.

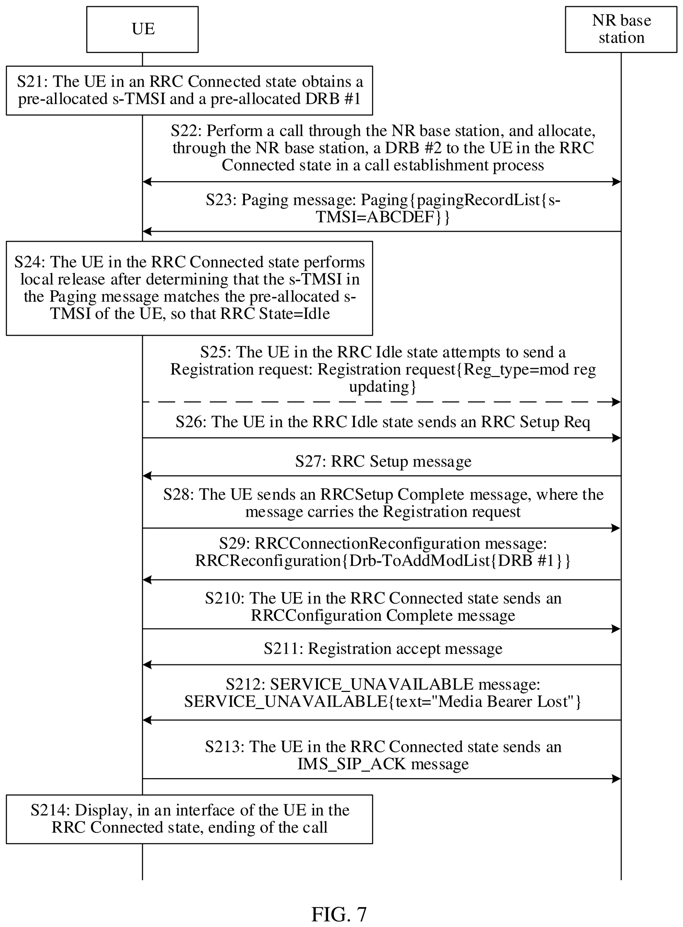

FIG. 7 shows a processing procedure after a UE in an RRC Connected state is in a call through an NR base station in an NR network and receives a Paging message used for paging the UE during the call. In the procedure, the NR base stations in different steps may be a same base station, and the following steps may be included.

S21: The UE in the RRC Connected state obtains a pre-allocated s-TMSI and a pre-allocated DRB, for example, s-TMSI=ABCDEF, and the NR base station allocates one DRB to the UE, where the DRB is marked as a DRB #1, and the DRB #1 indicates an IMS default bearer.

S22: The UE in the RRC Connected state establishes a call through the NR base station, and in the call establishment process, a DRB #2 is allocated through the NR base station to the UE in the RRC Connected state, where the DRB #2 represents an IMS dedicated bearer, and the two DRBs, namely, the DRB #1 and the DRB #2, are merely examples. The UE in the RRC Connected state may make a call through an RRC connection established with the NR base station. The RRC connection may be the foregoing first RRC connection.

S23: The NR base station sends a Paging message to the UE in the RRC Connected state in the process in which the UE in the RRC Connected state performs the call, where a pagingRecordList field of the Paging message carries a UE identifier, for example, s-TMSI=ABCDEF, and the s-TMSI may be the foregoing first temporary identifier.

S24: The UE in the RRC Connected state performs local release after determining that the s-TMSI in the Paging message matches the pre-allocated s-TMSI of the UE, so that the UE switches from the RRC Connected state to an RRC Idle state.

S25: The UE in the RRC Idle state attempts to send a registration request (Registration request) to the NR base station, where mod reg updating is carried in a reg_type field of the Registration request, to trigger re-establishment of an RRC connection.

S26: The UE in the RRC Idle state sends an RRC connection request (RRC Setup Req) to the NR base station.

S27: The NR base station sends an RRC connection setup (RRC Setup) message to the UE.

S28: The UE sends an RRC setup complete (RRCSetup Complete) message to the NR base station, so that the UE re-completes RRC setup, and the UE enters the RRC Connected state. The RRCSetup Complete message may carry the Registration request, or the UE sends the Registration request to the NR base station after sending the RRCSetup Complete message.

S29: The NR base station sends an RRC connection reconfiguration (RRCReconfiguration) message to the UE in the RRC Connected state, where the message may carry the DRB allocated to the UE in the RRC Connected state, for example, the DRB allocated to the UE is carried in a drb-ToAddModList field of the message. In this embodiment, The DRB #1 is carried in the DRB-ToAddModList field, that is, one DRB is allocated to the UE in the RRC Connected state, and the DRB #1 indicates an IMS default bearer.

S210: The UE in the RRC Connected state sends an RRC connection configuration complete (RRCConfiguration Complete) message to the NR base station.

S211: The NR base station sends a registration accept (Registration accept) message to the UE in the RRC Connected state. In some examples, step S25 is an example of triggering re-establishment of the RRC connection, and is an optional step. Correspondingly, step S211 is also optional.

S212: The NR base station sends a service unavailable (SERVICE_UNAVAILABLE) message to the UE in the RRC Connected state, where the message carries text (or warning)="Media Bearer Lost", to indicate that a media bearer resource is lost. This is mainly caused because there is no IMS dedicated bearer allocated to carry a voice service.

S213: The UE in the RRC Connected state sends an acknowledgment (IMS_SIP_ACK) message to the NR base station, to end the call.

S214: Display, in an interface of the UE in the RRC Connected state, ending of the call, and in this case, a user senses that the call is dropped.

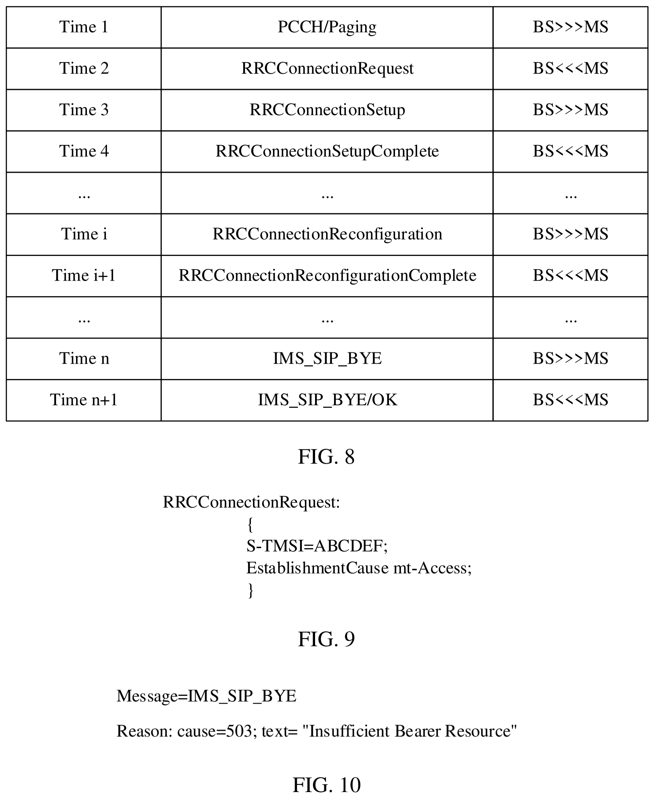

Processing of a UE in an RRC Connected state after receiving a Paging message used for paging the UE is described from the perspective of code. FIG. 8 shows re-establishment of an RRC connection, re-configuration of a resource, and feedback of IMS signaling after a paging message that is sent by an LTE base station and that is used for paging the UE is received. In FIG. 8, MS is the UE, BS is the base station, BS>>>MS indicates that the base station sends a message to the UE, and BS<<<MS indicates that the UE sends a message to the base station. FIG. 9 shows that a reason that is for re-establishing an RRC connection and that is carried in an RRC connection request may be that there is mt-access (mt-Access) carried in the RRC connection request. The mt-Access is an example of the reason for re-establishing the RRC connection. The reason for re-establishing the RRC connection may alternatively be mo signaling (signaling access), mo-VoiceCall (voice call access), mo-Data (data access), or the like. FIG. 10 shows that a reason for call dropping is insufficient bearer resources (Insufficient Bearer Resource).

In conclusion, in a call scenario, for a UE in an RRC Connected state, whether in an NR network or an LTE network, after receiving a Paging message used for paging the UE, the UE in the RRC Connected state performs local release, and then re-establishes an RRC connection. However, in the process of re-establishing the RRC connection, a network side device does not reconfigure an IMS dedicated bearer used for carrying a voice service for the UE, and a call of the UE is BYE/Canceled by the network side device by using a 503 reason value. Consequently, the call is dropped, reducing a call success rate and user experience.

Some embodiments of this application provide a paging message processing method. For a UE in an RRC Connected state, after receiving a Paging message used for paging the UE, the UE does not respond (is forbidden to respond/rejects to respond) to the Paging. Because the UE does not respond to the Paging message after receiving the Paging message used for paging the UE, the UE may not perform operations such as local release and re-establishment of an RRC connection, to reduce call drops caused by these operations, thereby improving a call success rate and user experience.

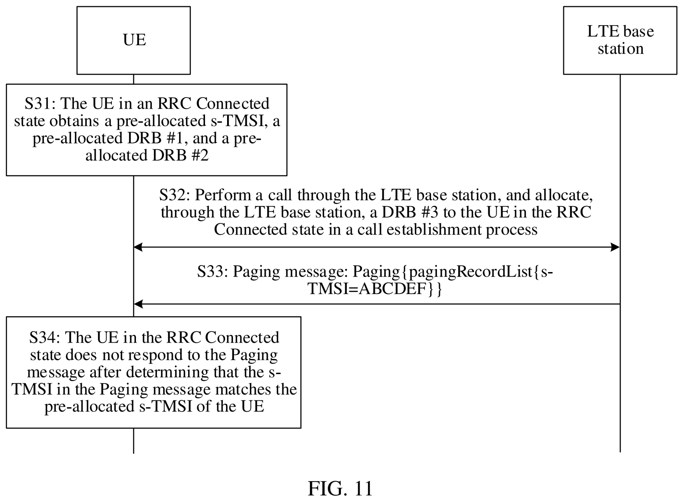

The following describes the paging message processing method provided in embodiments of this application by using an example in which a UE in an RRC Connected state makes a call through an LTE base station. In the paging message processing method, LTE base stations in different steps may be a same base station. FIG. 11 is a schematic signaling diagram of a paging message processing method provided in embodiments of this application, and the following steps may be included.

S31 and S32 are the same as step S11 and step S12, and details are not described herein again.

S33: The LTE base station sends a Paging message to the UE in the RRC Connected state, where a pagingRecordList field of the Paging message carries a UE identifier, for example, the pagingRecordList field carries an s-TMSI, and s-TMSI=ABCDEF, to page, through the Paging message, a UE whose s-TMSI is ABCDEF. For ease of description, the Paging message mentioned below may refer to the Paging message in step S33, namely, the Paging message used for paging the UE whose s-TMSI is ABCDEF.

S34: The UE in the RRC Connected state ignores the Paging message after determining that the s-TMSI in the Paging message matches a pre-allocated s-TMSI of the UE, and continues to perform the call through the LTE base station. The ignoring the Paging message herein refers to not responding (forbidden to respond/rejecting to respond) to the Paging message.

The UE in the RRC Connected state not responding to the Paging message may mean that the UE does not perform local release after receiving the Paging message, nor enters an RRC Idle state, nor sends an RRC connection establishment request to the base station, nor sends a request for triggering re-establishment of an RRC connection to the base station.

For a UE in an RRC Connected state, if an incoming call occurs, a network side device (a core network device and a base station) does not need to page the UE in the RRC Connected state through a Paging message, and directly delivers an invite (invite) message to the UE in the RRC Connected state. However, after research, the applicant finds that in a process in which the UE is in the RRC Connected state and performs a call through an LTE base station, the network side device sends, to the UE in the RRC Connected state, a Paging message used for paging the UE. After receiving the Paging message, the UE in the RRC Connected state considers that states between the UE and the network side device may be out of synchronization. The UE in the RRC Connected state performs local release, re-establishes an RRC connection, and the like, and the network side device does not resume an IMS dedicated bearer for a voice service and delivers a bye/cancel message, causing dropping of the call performed before the Paging message is received.

However, in the process in which the UE is in the RRC Connected state and performs a call through the LTE base station, before the Paging message used for paging the UE is received, an uplink call and a downlink call are both normal. In the process in which the UE in the RRC Connected state performs the call, after receiving the Paging message, the UE does not need to perform procedures such as local release and re-establishment of an RRC connection. Therefore, in some embodiments provided in this application, in the process in which the UE is in the RRC Connected state and performs a call, if the UE receives a Paging message carrying an s-TMSI of the UE to page the UE, the UE does not respond to the Paging message, so that the UE can continue to perform the current call, thereby avoiding dropping of the current call due to responding to the Paging message, and improving a call success rate and user experience.

In addition, in some embodiments provided in this application, a preset condition may be added, and the Paging message is not responded to when the preset condition is met.

In an example, during a call of a UE in an RRC Connected state, the UE detects and records a receiving/transmitting status of voice data within a first preset time period. If a Paging message (namely, a Paging message other than an ETWS primary notification and/or an ETWS secondary notification/CMAS notification/SI system information) is received, and receiving/transmitting of voice data within the first preset time period (for example, X seconds, where X is greater than or equal to 1) before the Paging message is received is normal, the UE may not respond to the Paging message.

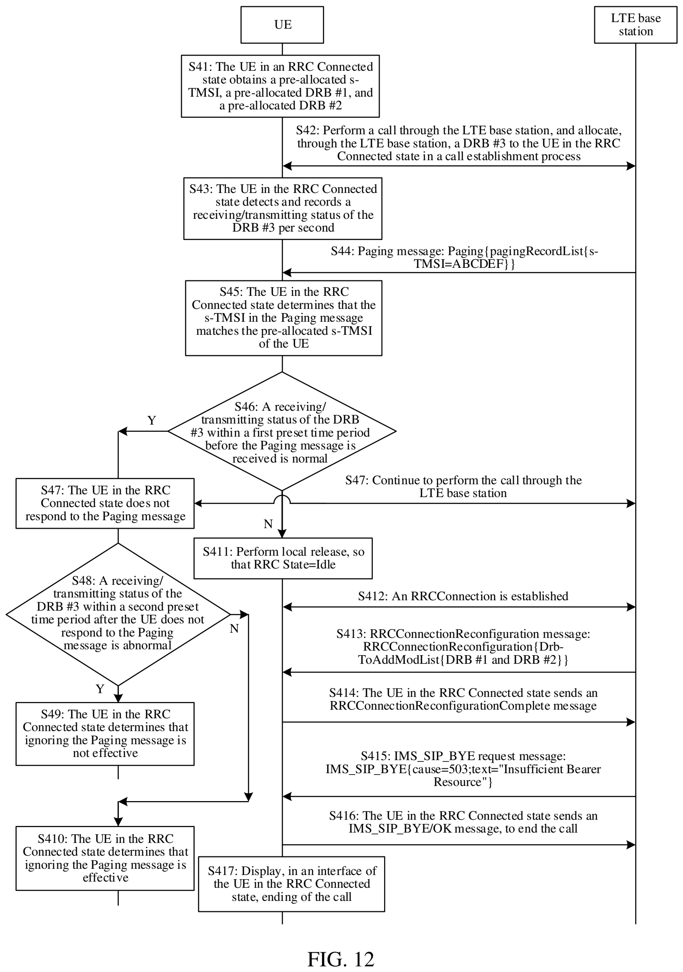

As an optional operation, after the UE does not respond to the Paging message, the UE may detect and record a receiving/transmitting status of voice data within a second preset time period (for example, t1 seconds, where t1 is greater than or equal to 1). If receiving/transmitting of voice data is normal within the second preset time period, it indicates that not responding to the Paging message is effective, and the UE may keep the call normal in a case in which the UE does not respond to the Paging message. If receiving/transmitting of the voice data is abnormal in the second preset time period, it is considered that not responding to the Paging message is not effective, and when the UE is in the RRC Connected state and receives a Paging message sent by the same LTE base station again, the UE may respond to the Paging message. A time interval between not responding to the Paging message and receiving the Paging message again may be less than a preset time. The preset time may be N seconds, and N is greater than or equal to 1. That is, the time interval between not responding to the Paging message and receiving the Paging message again is short, and a probability of a change of the receiving/transmitting status of the voice data within a short time is small. Therefore, the UE may receive the Paging message again when receiving/transmitting of the voice data is abnormal. In this case, the UE may respond to the Paging message and re-establish an RRC connection to the LTE base station, to resume normal data receiving/transmitting by re-establishing the RRC connection. FIG. 12 is another schematic signaling diagram of a paging message processing method according to an embodiment of this application, and the following steps may be included.

S41 and S42 are the same as step S11 and step S12, and details are not described herein again.

S43: A UE in an RRC Connected state detects and records a receiving/transmitting status of a DRB #3 per second. The DRB #3 is an IMS dedicated bearer, and the IMS dedicated bearer is used to carry a voice service. A receiving/transmitting status of voice data on the IMS dedicated bearer is recorded by recording the receiving/transmitting status of the DRB #3.

S44: An LTE base station sends a Paging message to the UE in the RRC Connected state.

S45: The UE in the RRC Connected state determines that an s-TMSI in the Paging message matches a pre-allocated s-TMSI of the UE.

S46: The UE in the RRC Connected state determines whether a receiving/transmitting status of the DRB #3 within a first preset time period (for example, X seconds) before the Paging message is received is normal, and if the receiving/transmitting status of the DRB #3 is normal, performs step S47, or if the receiving/transmitting status of the DRB #3 is abnormal, performs step S413. The receiving/transmitting status of the DRB #3 being normal may mean that the UE in the RRC Connected state sends voice data to a peer end of a call through the LTE base station, and the UE in the RRC Connected state may receive voice data of the peer end of the call that is sent by the LTE base station. The receiving/transmitting status of the DRB #3 being abnormal may mean that the UE in the RRC Connected state cannot send the voice data to the peer end of the call through the LTE base station, and/or the UE in the RRC Connected state does not receive the voice data of the peer end of the call that is sent by the LTE base station.

S47: The UE in the RRC Connected state does not respond to the Paging message, and continues to perform the call through the LTE base station.

S48: The UE in the RRC Connected state determines whether a receiving/transmitting status of the DRB #3 within a second preset time period (for example, t1 seconds) after the UE does not respond to the Paging message is abnormal, and if the status is abnormal, performs step S49, or if the status is not abnormal, performs step S410. A start point of the second preset time period after the Paging message is not responded to may be when the Paging message is received, or may be when it is determined that the s-TMSIs match, or may be when it is determined that the Paging message is not responded to, or the like. An end point of the second preset time period after the Paging message is not responded to may be a time point after the Paging message is not responded to.

S49: The UE in the RRC Connected state determines that ignoring the Paging message is not effective. The UE receives again a Paging message that is sent by the LTE base station and that is used for paging the UE, and may determine, based on a time interval at which the Paging message is received again, whether to not respond to the Paging message. The receiving again the Paging message that is sent by the LTE and that is used for paging the UE may be: receiving again, in a process in which the UE is in the RRC Connected state and continues to perform the call through the LTE base station, the Paging message that is sent by the LTE base station and that is used for paging the UE; or, receiving, in a process in which the UE is in the RRC Connected state and performs a next call through the LTE base station, the Paging message that is sent by the LTE base station and that is used for paging the UE.

S410: The UE in the RRC Connected state determines that ignoring the Paging message is effective. The UE in the RRC Connected state may continue to not respond to the Paging message when receiving again the Paging message that is sent by the LTE base station and that is used for paging the UE.

S411: The UE in the RRC Connected state performs local release, and the UE switches from the RRC Connected state to an RRC Idle state.

S412: The UE in the RRC Idle state re-establishes an RRC connection (RRCConnection establishment) with the LTE base station. For a process, refer to step S15 to step S18.

S413 to S417 are the same as step S18 to step S112, and details are not described herein again.

Therefore, in a call process of the UE in the RRC Connected state, if receiving/transmitting of voice data within the first preset time period before the Paging message is received is normal, the UE may not respond to the Paging message, to continue the current call on the premise that the UE can normally receive and transmit voice data, thereby avoiding dropping of the current call due to responding to the Paging message, and improving a call success rate. The UE may detect and record a receiving/transmitting status of the voice data within the second preset time period. If the receiving/transmitting status of the voice data within the second preset time period is normal, it indicates that the UE can keep the call normal in a case in which the UE does not respond to the Paging message, and not responding to the Paging message by the UE is effective (which may be understood as bringing benefits to the current call). If receiving/transmitting of the voice data within the second preset time period is abnormal, it is considered that not responding to the Paging message is not effective (which may be understood as bringing no benefit to the current call). Therefore, the UE may determine, based on whether not responding to the Paging message brings benefits to the current call, whether to respond to the Paging message when receiving again the Paging message that is sent by the LTE base station and that is used for paging the UE. Optionally, the UE may determine, based on the time interval at which the Paging message is received again, whether to not respond to the Paging message. If the time interval between not responding to the Paging message and receiving the Paging message again is short, there is a low possibility that a capability of the LTE base station changes within a short time. It is determined, based on the capability of the LTE base station within a short time, whether to respond to the Paging message, to improve accuracy.

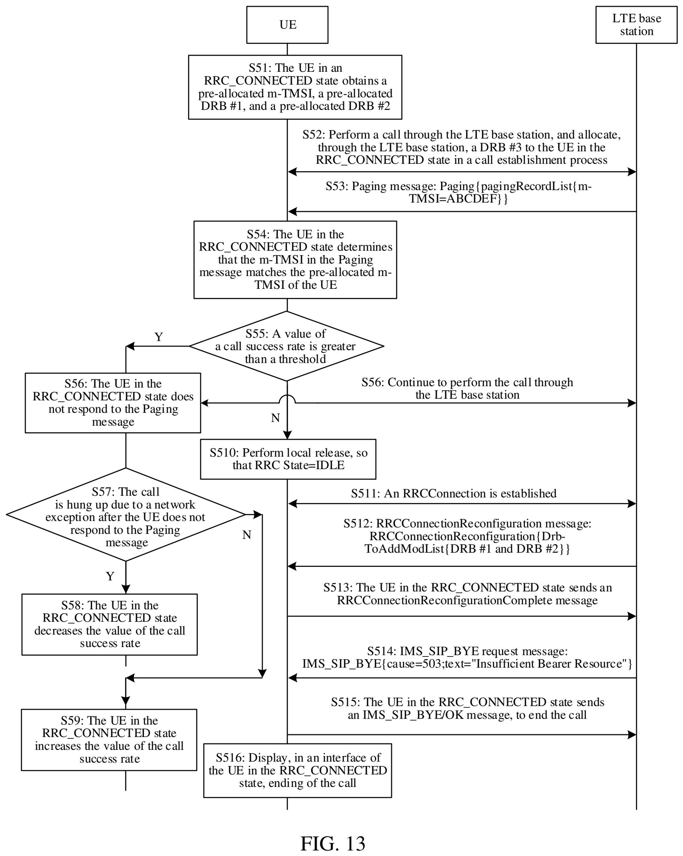

FIG. 13 is still another schematic signaling diagram of a paging message processing method according to an embodiment of this application. In the paging message processing method shown in FIG. 13, a call success rate being greater than a threshold is used as a preset condition of not responding to a Paging message, and the following steps may be included.

S51 to S53 are the same as step S11 to step S13, and details are not described herein again.

S54: A UE in an RRC Connected state determines that an s-TMSI in a Paging message matches a pre-allocated s-TMSI of the UE.

S55: The UE in the RRC Connected state determines whether a value of a call success rate is greater than a threshold, and if the value is greater than the threshold, performs step S56, or if the value is less than or equal to the threshold, performs step S510. The call success rate is a proportion or a quantity of times that the UE can successfully complete a call after the UE does not respond to the Paging message used for paging the UE in a process in which the UE is in the RRC Connected state and performs the call. A value of the threshold is not limited in this embodiment.

The UE may preset an initial value for the call success rate. The UE in the RRC Connected state receives the Paging message for the first time, determines, based on the initial value of the call success rate, whether to not respond to the Paging message, and monitors whether a call is abnormally hung up due to a network exception when not responding to the Paging message, to update the call success rate based on whether the call is abnormally hung up due to the network exception. Alternatively, after receiving the Paging message, the UE in the RRC Connected state may directly not respond to the Paging message (that is, step S55 is skipped). After obtaining the call success rate by collecting statistics, if the UE receives the Paging message that is sent by the LTE base station and that is used for paging the UE, the UE performs step S55, and determines whether to not respond to the Paging message based on the call success rate.

S56: The UE in the RRC Connected state does not respond to the Paging message, and continues to perform the call through the LTE base station.

S57: The UE in the RRC Connected state determines whether the call is hung up due to a network exception after the UE does not respond to the Paging message, and if the call is hung up due to the network exception, performs step S58, or if the call is not hung up due to the network exception, performs step S59. In some examples, the UE may determine whether a call is hung up due to a network exception within a third preset time period (for example, t seconds) after the UE does not respond to the Paging message. A start point of the third preset time period after the Paging message is not responded to may be when the Paging message is received, or may be when it is determined that the s-TMSIs match, or may be when it is determined that the Paging message is not responded to, or the like. An end point of the third preset time period after the Paging message is not responded to may be a time point after the Paging message is not responded to.

S58: The UE in the RRC Connected state decreases the value of the call success rate, for example, a preset value is subtracted from the value of the call success rate.

S59: The UE in the RRC Connected state increases the value of the call success rate, for example, the value of the call success rate is increased by a preset value.

S510 to S516 are the same as step S411 to step S417, and details are not described herein again.

In this embodiment, the value of the call success rate being greater than the threshold indicates that a probability that the UE successfully completes the call is high when the UE in the RRC Connected state does not respond to the Paging message. Therefore, in a process in which the UE is in the RRC Connected state and performs a call through the LTE base station, if the value of the call success rate is greater than the threshold when the UE receives the Paging message that is sent by the LTE base station and that is used for Paging the UE, the UE can successfully complete the call without responding to the Paging message, to improve the call success rate by not responding to the Paging message. Optionally, the UE may continue to monitor a call status of the call after not responding to the Paging message, to update the call success rate based on whether the call is hung up due to a network exception, so that the call success rate can be updated in real time based on the call status, thereby ensuring accuracy of the call success rate, and controlling processing of the Paging message by the UE based on an accurate call success rate.

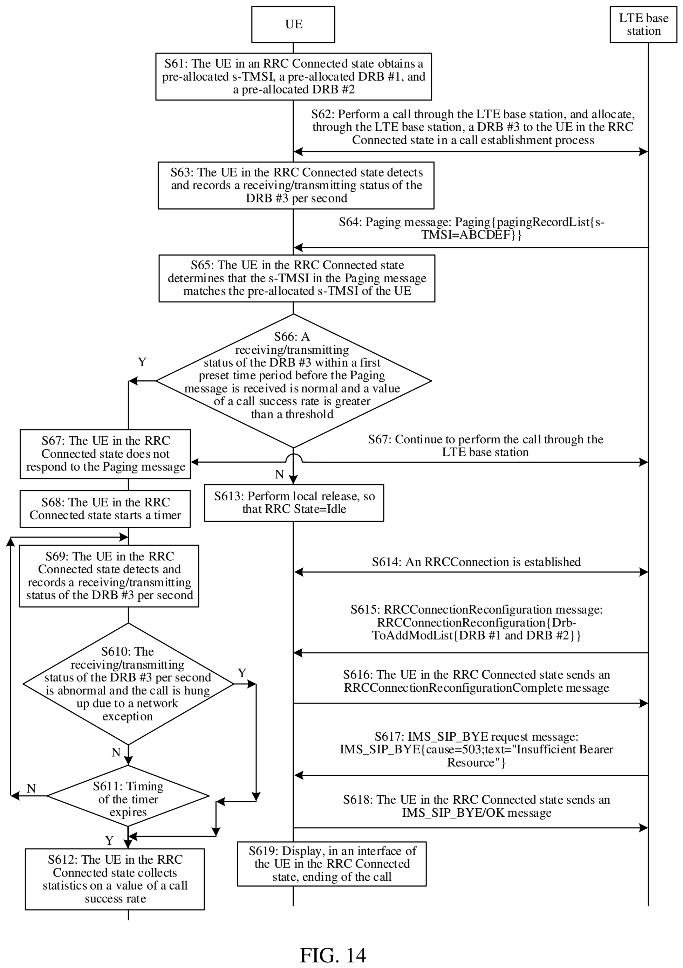

FIG. 14 is yet another schematic signaling diagram of a Paging message processing method according to an embodiment of this application. The Paging processing method shown in FIG. 14 combines a call success rate and a receiving/transmitting status of voice data to control whether to not respond to a Paging message, and the following steps may be included.

S61 to S65 are the same as step S41 to step S45, and details are not described herein again.

S66: A UE in an RRC Connected state determines whether a receiving/transmitting status of a DRB #3 within a first preset time period (for example, X seconds) before the Paging message is received is normal and whether a value of a call success rate is greater than a threshold. If the receiving/transmitting status of the DRB #3 is normal and the value of the call success rate is greater than the threshold, step S67 is performed. If the receiving/transmitting status of the DRB #3 is abnormal and/or the value of the call success rate is not greater than the threshold, step S613 is performed.

S67: The UE in the RRC Connected state does not respond to the Paging message, and continues to perform the call through the LTE base station.

S68: The UE in the RRC Connected state starts a timer. The timer may be started after the Paging message is received, or after it is determined that s-TMSIs match, or after it is determined in step S66 that the receiving/transmitting status of the DRB #3 is normal and the value of the call success rate is greater than the threshold, or the like. A timing for starting the timer T1 is not limited in this embodiment.

S69: The UE in the RRC Connected state detects and records a receiving/transmitting status of the DRB #3 per second after the timer starts.

S610: The UE in the RRC Connected state determines whether the receiving/transmitting status of the DRB #3 per second is abnormal and whether the call is hung up due to a network exception after the UE does not respond to the Paging message, and if the receiving/transmitting status is normal and the call is not hung up due to the network exception, performs step S611, or if the receiving/transmitting status is abnormal and/or the call is hung up due to the network exception, performs step S612.

S611: The UE in the RRC Connected state determines whether timing of the timer expires, and if the timing of the timer does not expire, returns to perform step S69, or if the timing of the timer expires, performs step S612. Whether the timing of the timer expires may be whether the timing of the timer is greater than preset duration. If the timing of the timer is greater than the preset duration, the timing of the timer expires; or if the timing of the timer is not greater than the preset duration, the timing of the timer does not expire.

S612: The UE in the RRC Connected state collects statistics on a value of a call success rate. If the receiving/transmitting status is abnormal and/or the call is hung up due to the network exception, the UE may decrease the value of the call success rate. If the receiving/transmitting status is normal and the call is not hung up due to the network exception, the UE may increase the value of the call success rate.

S613 to SS619 are the same as step S411 to step S417, and details are not described herein again.

In this embodiment, In a call process of the UE in the RRC Connected state, if the receiving/transmitting status within the first preset time period before the Paging message is received is normal and the value of the call success rate is greater than the threshold, it indicates that the UE can successfully complete the call without responding to the Paging message. Therefore, the call success rate is combined with the receiving/transmitting status of the DRB #3 to control the call, thereby improving the call success rate. Optionally, after not responding to the Paging message, the UE may continue to monitor a call status and the receiving/transmitting status of the DRB #3, to update the call success rate based on whether the call is hung up due to a network exception and whether the receiving/transmitting status of the DRB #3 is normal, so that the call success rate can be updated in real time based on the call status, thereby ensuring accuracy of the call success rate, and controlling processing of the Paging message by the UE based on an accurate call success rate.

Herein, it should be noted that In a process in which the UE in the RRC Connected state is in a call process, the UE receives the Paging message sent by the LTE base station, where the Paging message includes at least one of a systemInfoModification field, an etws-indication field, and a cmas-Indication field, the systemInfoModification field carries modified system information, the etws-indication field carries an etws notification, the cmas-Indication field carries a cmas notification, and the Paging message is used to notify the UE of at least one of the system information being modified, receiving the etws notification, or receiving the cmas notification. In this case, the UE responds to the Paging message. That the UE responds to the Paging message may affect the call performed through the RRC connection. Responding to the Paging message includes at least one of the following: The UE releases an RRC resource corresponding to a first RRC connection, the UE switches from the RRC Connected state to the RRC Idle state, the UE sends, to the LTE base station, a request for triggering re-establishment of an RRC connection, or the UE sends an RRC connection request to the LTE base station. The first RRC connection may be an RRC connection established between the UE and the LTE base station and used for the call.

In some embodiments, the terminal may be a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, a smart watch, or the like. A specific form of the terminal is not specially limited in embodiments of this application.

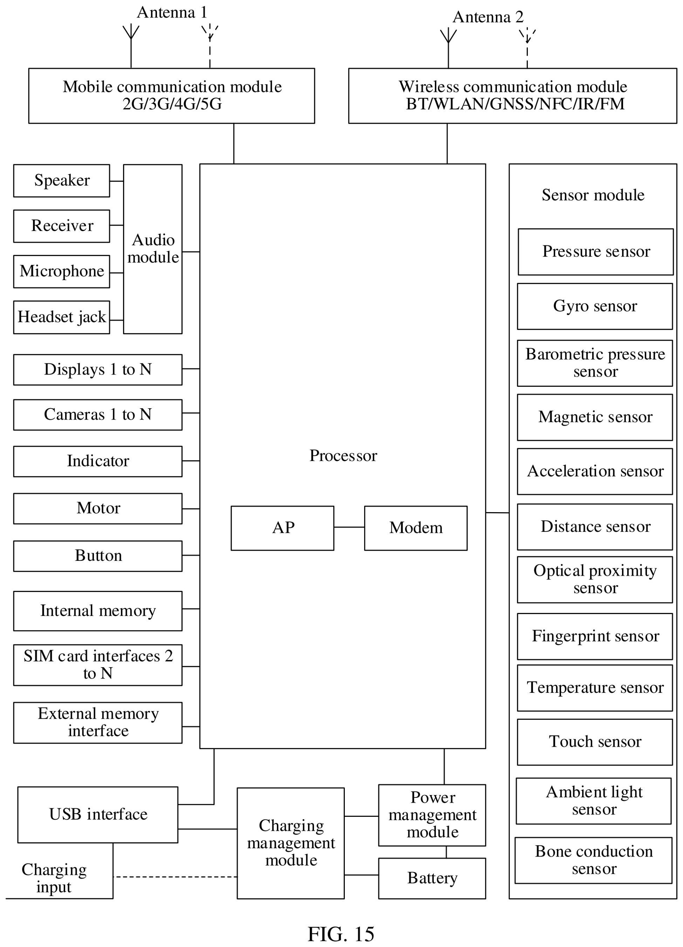

FIG. 15 shows a hardware structure of the terminal, and the terminal device may include: a processor, an external memory interface, an internal memory, a universal serial bus (Universal Serial Bus, USB) interface, a charging management module, a power management module, a battery, an antenna 1, an antenna 2, a mobile communication module, a wireless communication module, a sensor module, a key, a motor, an indicator, a camera, a display, a SIM card interface, and the like. An audio module may include a speaker, a receiver, a microphone, a headset jack, and the like. The sensor module may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in this embodiment of this application does not constitute a specific limitation on the terminal. In some other embodiments, the terminal may include more or fewer components than those shown in the figure, some components may be combined, some components may be split, or a different component deployment may be used. The components shown in the figure may be implemented through hardware, software, or a combination of software and hardware.

The processor may include one or more processing units. For example, the processor may include an application processor (Application Processor, AP), a modem processor (Modem, also referred to as a baseband processor), a graphics processing unit (Graphics Processing Unit, GPU), an image signal processor (Image Signal Processor, ISP), a controller, a video codec, a digital signal processor (Digital Signal Processor, DSP), and/or a neural-network processing unit (Neural-network Processing Unit, NPU). Different processing units may be separate devices, or may be integrated to one or more processors. The processor is a nerve center and a command center of the terminal. The controller can generate an operation control signal based on instruction operation code and a timing signal, to complete control of fetching and executing instructions.

A wireless communication function of the terminal may be implemented through the antenna 1, the antenna 2, the mobile communication module, the wireless communication module, the Modem, and the like. In some embodiments, in the terminal, the antenna 1 is coupled to the mobile communication module, and the antenna 2 is coupled to the wireless communication module, so that the terminal may communicate with a network side device and another terminal through a wireless communication technology.

In addition, an operating system runs on the foregoing components. The operating system is, for example, an iOS operating system developed by Apple, an Android open-source operating system developed by Google, or a Windows operating system developed by Microsoft.

The operating system of the terminal may use a layered architecture, an event-driven architecture, a microkernel architecture, a microservice architecture, or a cloud architecture. In embodiments of this application, an Android (Android) system with a layered architecture is used as an example to illustrate a software structure and the hardware structure of the terminal. It should be noted that although embodiments of this application are described by using the Android system as an example, a basic principle is also applicable to a terminal that is based on an operating system like iOS or Windows.

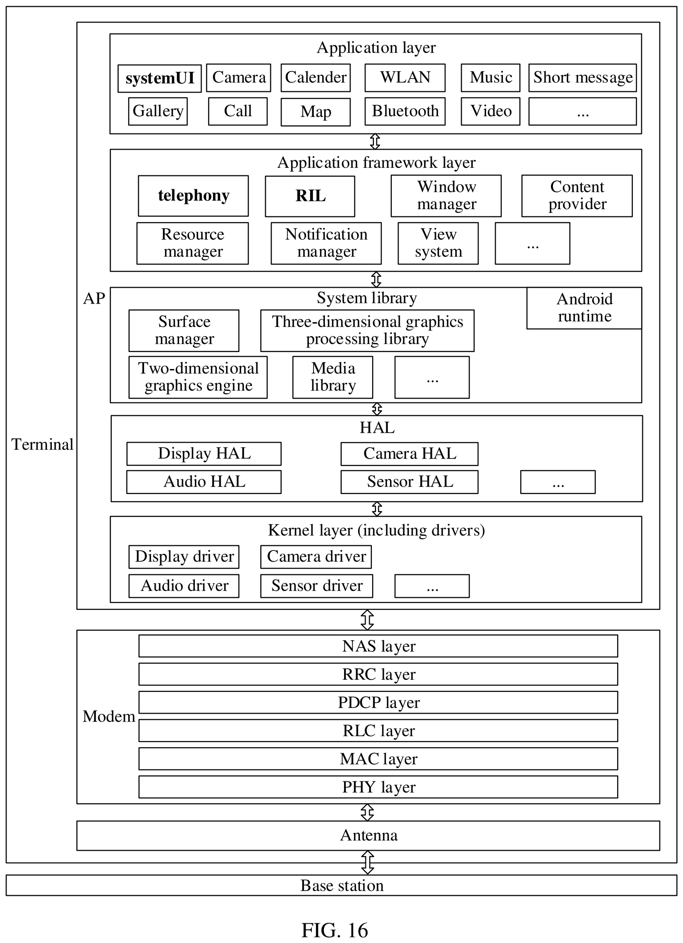

FIG. 16 is a block diagram of a software structure of the terminal. The software structure uses a layered architecture. In the layered architecture, software is divided into a plurality of layers, and each layer has a clear role and task. The layers communicate with each other through a software interface. An Android system running on an AP is used as an example. In some embodiments, the Android system is divided into five layers that are respectively an application layer, an application framework layer (Framework), an Android runtime and system library, a hardware abstraction layer (HAL), and a system kernel layer (Kernel) from top to bottom.

The application layer may include a series of application packages. The application package may include an APP like a camera, a gallery, a calendar, a call, a map, a WLAN, Bluetooth, music, a video, and messages. The application layer may further include a system UI (system UI). The system UI is used to display an interface of the terminal, for example, display a signal icon corresponding to a SIM card, and display a call interface. The application framework layer provides an application programming interface (Application Programming Interface, API) and a programming framework for the applications in the application layer. The application framework layer includes some predefined functions. For example, the application framework layer may include a window manager, a content provider, a view system, a phone manager, a resource manager, a notification manager, and the like. The phone manager is used to provide a call function of the terminal, for example, management of a call state (including answering and hanging up). The phone manager is represented as telephony in FIG. 14. The application framework layer may further include an RIL (Radio Interface Layer, radio interface layer), and the modem processor (Modem) may exchange information with the telephony through the RIL.

The Modem may include an NAS layer, an RRC layer, a packet data convergence protocol (Packet Data Convergence Protocol, PDCP) layer, a radio link control (Radio Link Control, RLC) layer, a Medium Access Control (Medium Access Control Layer, MAC) layer, and a physical (Physical, PHY) layer. The RRC layer may determine whether to respond to the Paging message. The Modem may interact with a base station through an antenna.

Some embodiments of this application provide a terminal. The terminal device may include one or more processors and a memory, where the memory is configured to store computer program code, the computer program code includes computer instructions, and when the one or more processors execute the computer instructions, the terminal performs the foregoing paging message processing method.

Some embodiments of this application provide a chip system, used in a terminal, and the chip system includes at least one processor and an interface, where the interface is configured to receive instructions and transmit the instructions to the at least one processor. The at least one processor runs the instructions, so that the terminal performs the foregoing paging message processing method. The chip system may be a Modem or a system on chip (System on Chip, Soc) including a Modem, and the foregoing paging message processing method may be implemented by the Modem.

## Claims

1. A paging message processing method, wherein the method comprises:
establishing, by a terminal in a radio resource control RRC idle Idle state, a first RRC connection with a network side device;
entering, by the terminal, an RRC connected Connected state after establishing the first RRC connection with the network side device;
performing, by the terminal in the RRC Connected state, a call through the first RRC connection;
receiving, by the terminal in the process of the call, a first paging Paging message sent by the network side device, wherein the first Paging message comprises a paging record list pagingRecordList field, the pagingRecordList field carries a first temporary identifier of the terminal, and the first Paging message pages the terminal through the first temporary identifier of the terminal; and
skipping, by the terminal, responding to the first Paging message, and continuing the call through the first RRC connection.

2. The method according to claim 1, wherein the method further comprises:
receiving, by the terminal in the RRC Idle state before the terminal establishes the first RRC connection with the network side device, a second paging Paging message sent by the network side device, wherein the second Paging message comprises a paging record list pagingRecordList field, the pagingRecordList field carries a second temporary identifier of the terminal, and the second Paging message pages the terminal through the second temporary identifier of the terminal; and
responding, by the terminal, to the second Paging message.

3. The method according to claim 2, wherein the responding, by the terminal, to the second Paging message comprises: sending, by the terminal, an RRC connection request to the network side device, to establish the first RRC connection.

4. The method according to any one of claims 1 to 3, wherein the method further comprises:
receiving, by the terminal in the process of the call, a third paging Paging message sent by the network side device, wherein the third Paging message comprises at least one of a system information modification systemInfoModification field, an earthquake and tsunami warning system notification indication etws-indication field, and a commercial mobile alert system notification indication cmas-Indication field, the systemInfoModification field carries modified system information, the etws-indication field carries an earthquake and tsunami warning system etws notification, the cmas-Indication field carries a commercial mobile alert system cmas notification, and the third Paging message is used to notify the terminal of at least one of the system information being modified, receiving the etws notification, or receiving the cmas notification; and
responding, by the terminal, to the third Paging message.

5. The method according to claim 4, wherein the call performed through the first RRC connection is affected due to responding, by the terminal, to the third Paging message.

6. The method according to any one of claims 1 to 5, wherein the skipping, by the terminal, responding to the first Paging message comprises:
skipping, by the terminal, releasing an RRC resource corresponding to the first RRC connection, skipping switching from the RRC Connected state to the RRC Idle state, skipping sending, to the network side device, a request for triggering re-establishment of an RRC connection, and skipping sending the RRC connection request to the network side device.

7. The method according to claim 4 or 5, wherein the responding, by the terminal, to the third Paging message comprises at least one of the following:
releasing, by the terminal, an RRC resource corresponding to the first RRC connection, switching, by the terminal, from the RRC Connected state to the RRC Idle state, sending, by the terminal to the network side device, a request for triggering re-establishment of an RRC connection, or sending, by the terminal, the RRC connection request to the network side device.

8. The method according to any one of claims 1 to 7, wherein the skipping, by the terminal, responding to the first Paging message comprises:
skipping, by the terminal, responding to the first Paging message in a case in which a value of a call success rate of the terminal is greater than a threshold, and/or a receiving/transmitting status of voice data on an Internet Protocol Multimedia Subsystem-dedicated bearer is normal within a first preset time period before the first Paging message is received, wherein the call success rate of the terminal indicates a probability that a call of the terminal is not automatically hung up in a historical time period in a case in which the terminal does not respond to the first Paging message after the terminal receives, in a first scenario, the first Paging message sent by the network side device, and the first scenario is a process in which the terminal is in the RRC Connected state and performs the call through the network side device.

9. The method according to any one of claims 1 to 8, wherein after the skipping, by the terminal, responding to the first Paging message, the method further comprises:
detecting whether the receiving/transmitting status of the voice data on the Internet Protocol Multimedia Subsystem-dedicated bearer is normal after skipping responding to the first Paging message, and/or whether the call continued through the network side device is automatically hung up due to a network exception after skipping responding to the first Paging message; and
if the receiving/transmitting status of the voice data is normal, and/or the call is not automatically hung up due to the network exception, after the terminal receives the first Paging message sent by the network side device, skipping responding, by the terminal, to the first Paging message received again; or
if the receiving/transmitting status of the voice data is abnormal, and/or the call is automatically hung up due to the network exception, after the terminal receives the first Paging message sent by the network side device, responding, by the terminal, to the first Paging message received again, wherein
the first Paging message received again is a first Paging message that is sent again by the network side device in a process in which the terminal is in the RRC Connected state and continues to perform the call through the network side device, or a first Paging message that is sent by the network side device in a process in which the terminal is in the RRC Connected state and performs a next call through the network side device.

10. The method according to claim 9, wherein the detecting whether the receiving/transmitting status of the voice data on the Internet Protocol Multimedia Subsystem-dedicated bearer is normal after skipping responding to the first Paging message, and/or whether the call continued through the network side device is automatically hung up due to a network exception after skipping responding to the first Paging message comprises:
detecting whether a receiving/transmitting status of the voice data on the Internet Protocol Multimedia Subsystem-dedicated bearer within a second preset time period after skipping responding to the first Paging message is normal, and/or whether the call continued through the network side device is automatically hung up due to a network exception within a third preset time period after skipping responding to the first Paging message.

11. The method according to claim 10, wherein a start point of either of the second preset time period and the third preset time period is any one of the following: a time point when the terminal receives the first Paging message, a time point when the terminal determines that the first temporary identifier carried in the first Paging message matches a pre-allocated first temporary identifier of the terminal, and a time point when the terminal skips responding to the first Paging message, and an end point of either of the second preset time period and the third preset time period is a time point after the terminal skips responding to the first Paging message.

12. The method according to any one of claims 1 to 11, wherein after the skipping, by the terminal, responding to the first Paging message, the method further comprises:
increasing, by the terminal, a value of the call success rate if the receiving/transmitting status of the voice data on the Internet Protocol Multimedia Subsystem-dedicated bearer is normal after the terminal skips responding to the first Paging message, and/or the call continued through the network side device is not automatically hung up due to the network exception after the terminal skips responding to the first Paging message; or
reducing, by the terminal, the value of the call success rate if the receiving/transmitting status of the voice data on the Internet Protocol Multimedia Subsystem-dedicated bearer is abnormal after the terminal skips responding to the first Paging message, and/or the call continued through the network side device is automatically hung up due to the network exception after the terminal skips responding to the first Paging message.

13. The method according to any one of claims 1 to 12, wherein the method comprises at least one of the following:
the first temporary identifier and/or the second temporary identifier is a temporary mobile subscriber identifier of system architecture evolution; or
the network side device is a long term evolution base station, and the request for triggering re-establishment of an RRC connection is a tracking area update request message; or
the network side device is a new radio base station, and the request for triggering re-establishment of an RRC connection is a registration request.

14. A terminal, wherein the terminal comprises:
one or more processors and a memory, wherein
the memory is configured to store computer program code, the computer program code comprises computer instructions, and when the one or more processors execute the computer instructions, the terminal performs the paging message processing method according to any one of claims 1 to 13.

15. A chip system, used in a terminal, wherein the chip system comprises at least one processor and an interface, the interface is configured to receive instructions and transmit the instructions to the at least one processor; and the at least one processor executes the instructions to enable the terminal to perform the paging message processing method according to any one of claims 1 to 13.
